# EUROPEAN PATENT APPLICATION

(11) **EP 1 018 832 A2**
(43) Date of publication of application: **12.07.2000**
(21) Application number: 99310377.9
(22) Date of filing: 21.12.1999
(51) Int. Cl.: H04M 1/72, H04N 7/08

(54) **Portable terminal with advertisement medium function**

(30) Priority: 08.01.1999 JP 263999
(71) Applicant: Sony Computer Entertainment Inc., Tokyo 107-0052 (JP)
(72) Inventor: Kawai, Eiji, c/o Sony Computer Entertainment Inc., Tokyo 107-0052 (JP)
(74) Representative: Turner, James Arthur

(57) **Abstract**

A portable telephone set or a portable terminal connected to an entertainment apparatus functions as an advertisement medium. When calendar information (352) and time information (354) based on a real-time clock (338) are displayed on a display screen (128) of a portable terminal (100), advertisement information (350) supplied via radio waves and received by an antenna (306) is simultaneously displayed. Since the advertisement information (350) is displayed simultaneously with the calendar and time information which draws much attention of the user, i.e., which is frequently viewed by the user, the portable terminal (100) can function as a highly effective advertisement

## Description

The present invention relates to portable terminals with an advertisement medium function.

Recently, there have been used portable terminals with a display unit such as existing portable telephone sets, PHS terminals, portable game machines, or PDAs (personal digital assistants) having an electronic note pad function.

Such portable terminals have a computer and store application software (hereinafter referred to as " main-purpose application software" ) that is run by the computer for performing various functions.

Almost all portable terminals with a display unit incorporate a real-time clock that is operated by a built-in cell even when the power supply of the portable terminals is turned off. When the main-purpose application software which is related to telephone, communications, games, schedules, etc. is not executed by the computer, the portable terminals display a clock and a calendar in a clock and calendar mode.

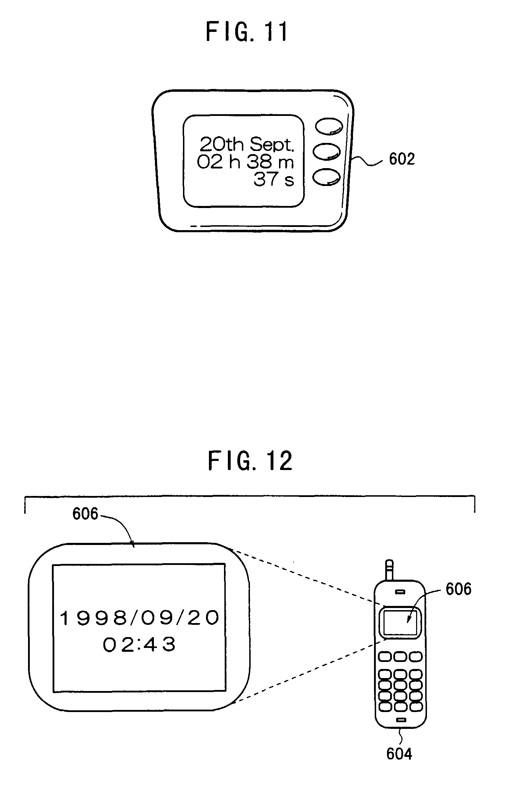

FIGS. 11 and 12 of the accompanying drawings show examples of displayed images in the clock and calendar mode. FIG. 11 shows a displayed image of " 20th Sept., 02 h, 38 m, 37 s" on a liquid-crystal display screen of a portable pedometer 602. FIG. 12 shows a displayed image of " 1998/09/20 02:43" on a liquid-crystal display screen 606 of a portable telephone set 604.

On many conventional portable terminals with a display unit, while the main-purpose application software is being executed, images related to the main-purpose application software are displayed on the display screen. However, when the main-purpose application software is not executed, a clock (time) and a calendar are displayed on the display screen.

In recent years, technological advances of display units, particularly, liquid-crystal display units, allow large-size liquid-crystal display panels (hence screens) and color liquid-crystal display panels to be available at low prices.

However, since the amount of information required in the clock and calendar mode is limited, the conventional portable terminals do not sufficiently utilize display resources including the color display capability and size of recent display units.

Even though the display units have improved display and color display capabilities, the level of performance required by the clock and calendar mode substantially remains unchanged. Therefore, the displayed image in the clock and calendar mode gives the user an unbalanced or insufficient impression in view of the advances of images displayed when the main-purpose application software.

Various respective aspects and features of the invention are defined in the appended claims.

Embodiments of the present invention can provide a portable terminal with an advertisement medium, which is capable of performing new functions, not available heretofore, for displaying images in a clock and calendar mode.

According to embodiments of the present invention, a portable terminal with an advertisement medium function has display control means for displaying, on a display screen, advertisement information and display information based on application software executed by a computer.

Therefore, the portable terminal also functions as an advertisement medium.

The application software may include at least entertainment-related software, so that the portable terminal provides an increased entertaining capability.

According to embodiments of the present invention, a portable terminal with an advertisement medium function has display control means for displaying, on a display screen, advertisement information and time information based on a real-time clock.

Since the advertisement information is displayed simultaneously with time information which draws much attention of the user, i.e., which is frequently viewed by the user, the portable terminal can function as a highly effective advertisement medium.

The advertisement information is inputted by a communication input unit and displayed on the display screen. Therefore, the advertisement information can be updated.

The communication input unit may comprise at least one, at least two, or all of radio wave inputting means, infrared information inputting means, and a physical connector. An optimum communication input unit may be provided depending on the cost of the personal terminal or needs of the user.

When a plurality of pieces of advertisement information inputted from the communication input unit are stored as data in the data storing memory, the display control means displays the plurality of pieces of advertisement information stored in the data storing memory on the display screen according to a given rule. Thus, the plurality of pieces of advertisement information can selectively be displayed on the display screen.

The given rule may be either a rule for taking out and displaying newly received advertisement information, a rule for displaying advertisement information a certain number of times and then displaying next advertisement information a certain number of times, a rule for displaying advertisement information for a certain period of time and then displaying next advertisement information for a certain period of time, or a rule for allowing the user to select preferred advertisement information based on a control action made via the manual controller. One of these rules may be selected by the user.

When advertisement information inputted from the communication input unit is supplied as data in a working memory, the display control means displays the advertisement information supplied to the working memory substantially on a real-time basis. The advertisement information can thus be transmitted immediately to the user who is watching the display screen.

If advertisement information inputted from the communication input unit as data comprises image information and sound information, the image information and the sound information may be stored in the data storing memory and synchronously displayed on the display screen and outputted from the sound outputting means. Inasmuch as an advertisement is given simultaneously as an image and sound, the advertisement information can be appealed more efficiently to the user.

The display control means may comprise means for displaying the advertisement information on the display screen at all times or for particular times by measuring the real-time clock. Such particular times may be selected by the user depending on the preference or the like of the user.

Advertisement information may be controlled by the computer so as to be inputted as data from the communication input unit when a certain one of the plurality of pieces of application software is activated or neither one of the plurality of pieces of application software is executed. Since the inputting of advertisement information is not caused as an interrupt while application software is being executed, the user can smoothly execute application software.

The invention will now be described by way of example with reference to the accompanying drawings, throughout which like parts are referred to by like references, and in which:
FIG. 1 is a plan view of an entertainment apparatus which incorporates a portable terminal according to the present invention;
FIG. 2 is a rear view of the entertainment apparatus, showing slots thereof;
FIG. 3 is a perspective view of the entertainment apparatus;
FIG. 4 is a block diagram of a specific arrangement of major electric components of the entertainment apparatus;
FIG. 5 is a plan view of the portable terminal;
FIG. 6 is a perspective view of the portable terminal;
FIG. 7 is a perspective view of the portable terminal with a lid being open;
FIG. 8 is a front elevational view of the portable terminal;
FIG. 9 is a block diagram of a specific arrangement of major electric components of the portable terminal;
FIG. 10 is a view illustrative of clock information and advertisement information that are simultaneously displayed on a display screen of the portable terminal;
FIG. 11 is a front elevational view showing an example of a displayed image on a conventional pedometer; and
FIG. 12 is a front elevational view showing an example of a displayed image on a conventional portable telephone set.

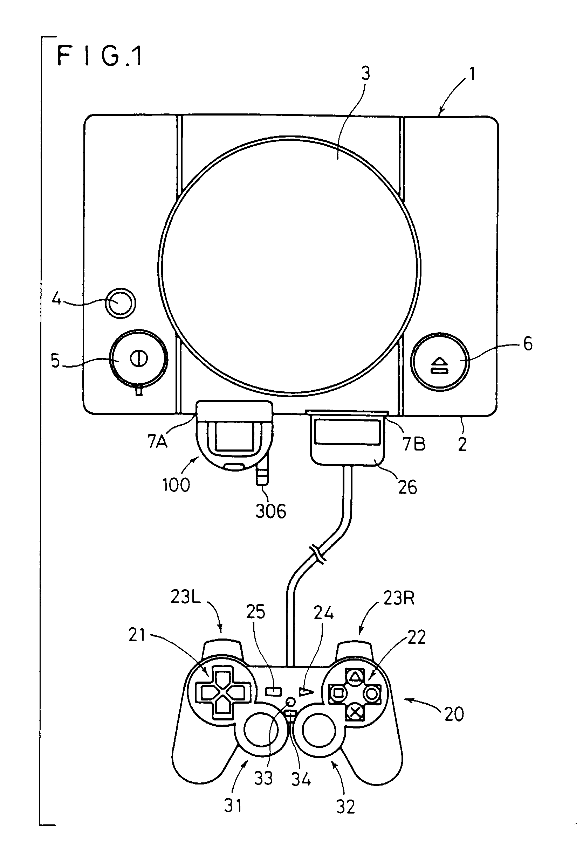

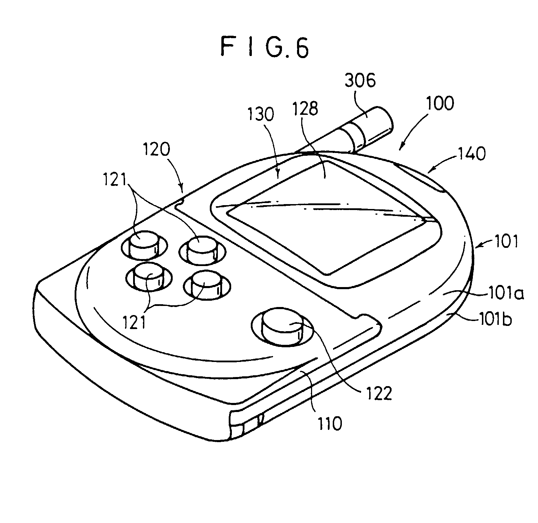

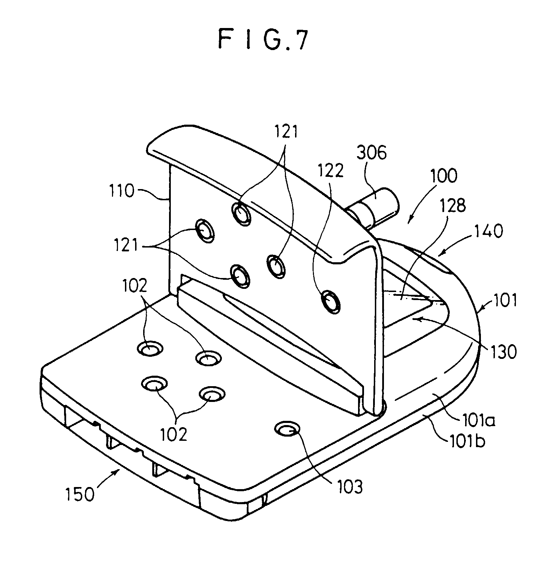

An embodiment of a portable terminal according to the present invention will be described below with reference to FIGS. 1 through 10.

FIG. 1 shows in plan an entertainment apparatus 1 to which a portable terminal 100 according to the present invention is detachably connected.

The entertainment apparatus 1 reads a program recorded in an optical disk or the like, for example, and executes a game, for example, based on the program depending on commands from the user, e.g., the game player. The execution of the game mainly represents controlling the progress of the game and the display of images and the generation of sounds.

The entertainment apparatus 1 has a rectangular casing 2 which houses a disk loading unit 3 substantially centrally therein for loading an optical disk such as a CD-ROM or the like as a recording medium for supplying an application program recorded therein for a video game or the like. The casing 2 supports a reset switch 4 for resetting a program which is being presently executed, a power supply switch 5, a disk control switch 6 for controlling the loading of the optical disk, and two slots 7A, 7B.

The entertainment apparatus 1 may be supplied with the application program via a communication link, rather than being supplied from the optical disk as the recording medium.

A manual controller 20 for supplying user's commands is connected to the entertainment apparatus 1.

Two manual controllers 20 may be connected respectively to the slots 7A, 7B allow two users or game players to play a competition game, for example. A memory card which has conventionally been used or a portable terminal 100 according to the embodiment of the present invention may also be inserted into the slots 7A, 7B. While the two slots 7A, 7B are shown in FIG. 1, the entertainment apparatus 1 may have more or less than two slots.

The manual controller 20 has first and second control pads 21, 22, a left button 23L, a right button 23R, a start button 24, a selector button 25, analog control pads 31, 32, a mode selector switch 33 for selecting control modes for the analog control pads 31, 32, and an indicator 34 for indicating a selected control mode. The manual controller 20 also has a vibration imparting mechanism (not shown) disposed therein for imparting vibrations to the manual controller 20 depending on how the video game proceeds. The manual controller 20 is electrically connected to the slot 7B in the casing 2 by a connector 26.

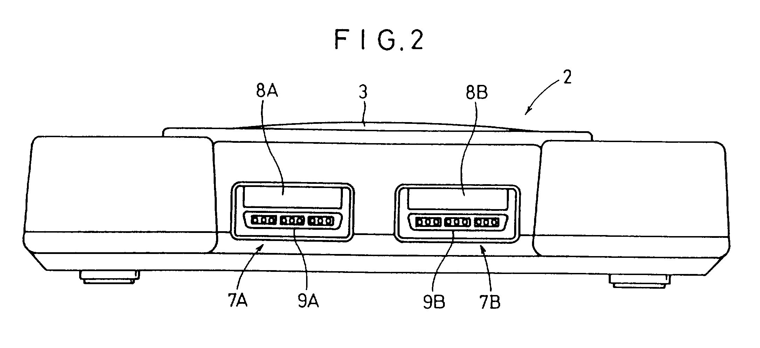

FIG. 2 shows the slots 7A, 7B which are defined in a front panel of the casing 2 of the entertainment apparatus 1.

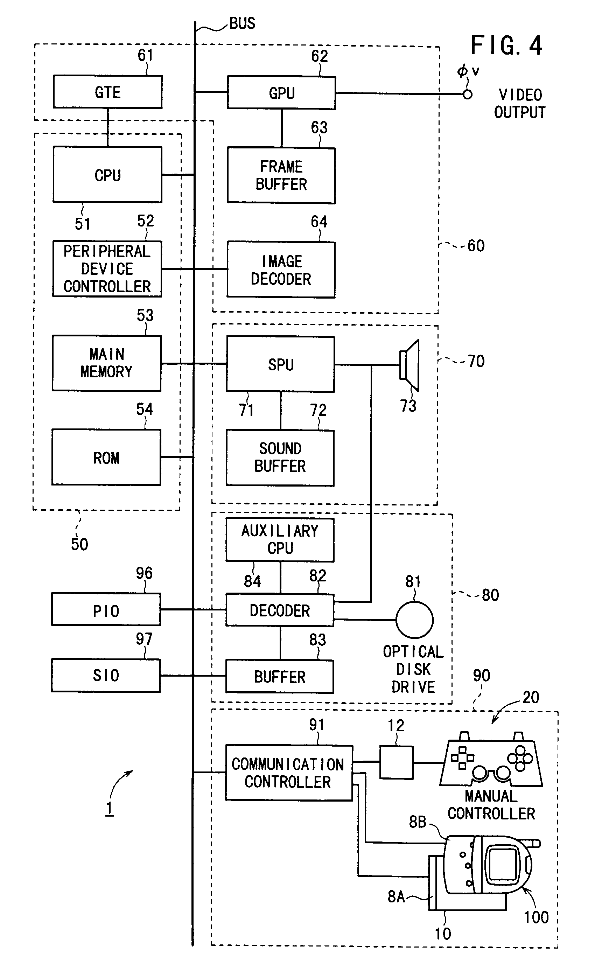

Each of the slots 7A, 7B has upper and lower units. Specifically, the slots 7A, 7B have respective memory card insertion units (also referred to as portable terminal insertion units) 8A, 8B as their upper units for inserting a memory card 10 (see FIG. 4) or the portable terminal 100 therein and respective controller connectors (jacks) 9A, 9B as their lower units for connection to a connection terminal (connector) 26 of the manual controller 20.

The memory card insertion units 8A, 8B have respective insertion holes (slots) that are of a horizontally elongate rectangular shape. These insertion slots have lower opposite corners round in contrast to upper opposite corners thereof so that the memory card 10 will not be inserted into the memory card insertion units 8A, 8B in the wrong orientation. The memory card insertion units 8A, 8B also have shutters for protecting connection terminals disposed therein for electric connection.

The controller connectors 9A, 9B also have respective insertion holes (slots) that are of a horizontally elongate rectangular shape. These insertion slots have lower opposite corners round in contrast to upper opposite corners thereof so that the connector terminal 26 of the manual controller 20 will not be connected to the controller connectors 9A, 9B in the wrong orientation. The insertion holes of the controller connectors 9A, 9B are different in shape from the insertion holes of the memory card insertion units 8A, 8B so that the memory card 10 will not be inserted into the insertion holes of the controller connectors 9A, 9B.

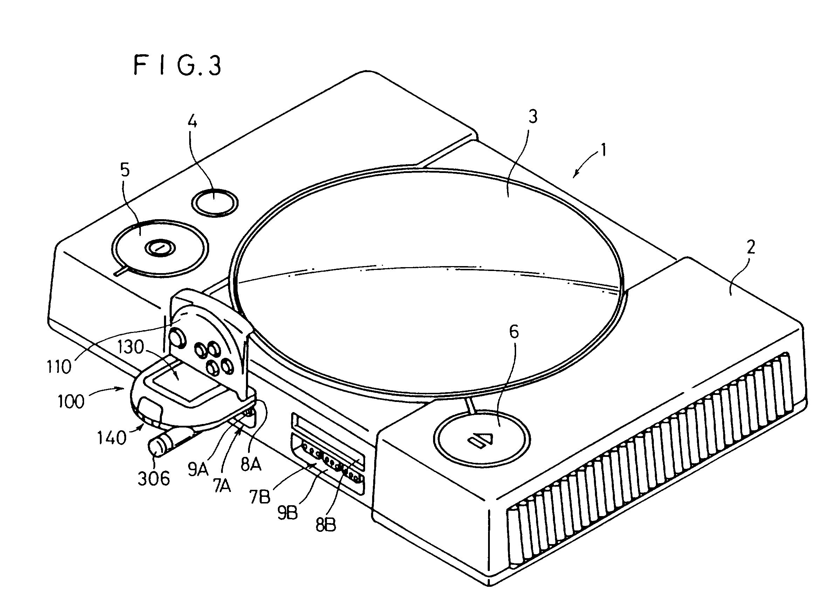

In FIG. 3, the portable terminal 100 is inserted in the memory card insertion unit 8A in the slot 7A which is defined in the front panel of the entertainment apparatus 1.

A specific arrangement of the entertainment apparatus 1 will be described below with reference to FIG. 4. As shown in FIG. 4, the entertainment apparatus 1 comprises a control system 50 including a central processing unit (CPU) 51 and its peripheral devices, a graphic system 60 including a graphic processing unit (GPU) 62 for generating and storing image data in a frame buffer 63, a sound system 70 including a sound processing unit (SPU) 71 for generating music sounds and sound effects, an optical disk controller 80 for controlling an optical disk in which application programs are recorded, a communication controller 90 for controlling signals from the manual controller 20 which enter instructions from the user, and data supplied to and from a memory card 10 which stores game settings, and a bus BUS to which the control system 50, the graphic system 60, the sound system 70, the optical disk controller 80, and the communication controller 90 are connected.

The control system 50 comprises a CPU 51, a peripheral device controller 52 for controlling interrupts and direct memory access (DMA) data transfer, a main memory 53 comprising a random-access memory (RAM), and a read-only memory (ROM) 54 which stores various programs such as an operating system for managing the main memory 53, the graphic system 60, the sound system 70, etc. The main memory 53 is a memory capable of storing a program which is being executed.

The CPU 51 controls the entertainment apparatus 1 in its entirety by executing the operating system stored in the ROM 54. The CPU 51 comprises a 32-bit RISC-CPU, for example.

When the entertainment apparatus 1 is turned on, the CPU 51 executes the operating system stored in the ROM 54 to start controlling the graphic system 60, the sound system 70, etc. For example, when the operating system is executed, the CPU 51 initializes the entertainment apparatus 1 in its entirety for confirming its operation, and thereafter controls the optical disc controller 80 to execute an application program recorded in the optical disk.

As the application program is executed, the CPU 51 controls the graphic system 60, the sound system 70, etc. depending on commands entered from the user for thereby controlling the display of images and the generation of music sounds and sound effects.

The graphic system 60 comprises a geometry transfer engine (GTE) 61 for performing coordinate transformations and other processing, a GPU 62 for generating image data according to instructions from the CPU 51, a frame buffer 63 for storing image data generated by the GPU 62, and an image decoder 64 for decoding image data compressed and encoded by an orthogonal transform such as a discrete cosine transform.

The GTE 61 has a parallel arithmetic mechanism for performing a plurality of arithmetic operations parallel to each other, and can perform coordinate transformations, light source calculations, matrixes, or vectors at a high speed in response to a request from the CPU 51. Specifically, the GTE 61 can calculate the coordinates of a maximum of 1.5 million polygons per second for a flat shading process to plot one triangular polygon with one color, for example. With the GTE 61, the entertainment apparatus 1 is able to reduce the burden on the CPU 51 and perform high-speed coordinate calculations.

According to an image generating instruction from the CPU 51, the GPU 62 generates and stores the data of a polygon or the like in the frame buffer 63. The GPU 62 is capable of generating and storing a maximum of 360 thousand polygons per second.

The frame buffer 63 comprises a dual-port RAM, and is capable of simultaneously storing image data generated by the GPU 62 or image data transferred from the main memory 53, and reading image data for display.

The frame buffer 63 has a storage capacity of 1 Mbytes, for example, and is handled as a 16-bit matrix made up of a horizontal row of 1024 pixels and a vertical column of 512 pixels. The frame buffer 63 has a display area for storing image data to be outputted as video output data, a CLUT (color look-up table) area for storing a color look-up table which will be referred to by the GPU 62 when it generates a polygon or the like, and a texture area for storing texture data to be subjected to coordinate transformations when a polygon is generated and mapped onto a polygon generated by the GPU 62. The CLUT area and the texture area are dynamically varied as the display area is varied.

The GPU 62 can perform, in addition to the flat shading process, a Gouraud shading process for determining colors in polygons by interpolating intensities from the vertices of the polygons, and a texture mapping process for mapping textures stored in the texture areas onto polygons. For performing the Gouraud shading process or texture mapping process, the GTE 61 can perform coordinate calculations for a maximum of about 500,000 polygons per second.

The image decoder 64 is controlled by the CPU 51 to decode image data of a still or moving image stored in the main memory 53, and store the decoded image into the main memory 53.

Image data reproduced by the image decoder 64 is transferred to the frame buffer 63 by the GPU 62, and can be used as a background for an image plotted by the GPU 62.

The sound system 70 comprises an SPU 71 for generating music sounds, sound effects, etc. based on instructions from the CPU 51, a sound buffer 72 for storing waveform data from the SPU 71, and a speaker 73 for outputting music sounds, sound effects, etc. generated by the SPU 71.

The SPU 71 has an ADPCM (adaptive differential PCM) function for reproducing 16-bit sound data which has been encoded as 4-bit differential sound data by ADPCM, a reproducing function for reproducing the waveform data stored in the sound buffer 72 to generate sound effects, etc., and a modulating function for modulating and reproducing the waveform data stored in the sound buffer 72.

The sound system 70 can be used as a sampling sound source which generates music sounds, sound effects, etc. based on the waveform data stored in the sound buffer 72 according to commands from the CPU 51.

The optical disk controller 80 comprises an optical disk drive 81 for reproducing application programs and data recorded on an optical disk such as a CD-ROM or the like, a decoder 82 for decoding programs and data that are recorded with an error correcting code added thereto, and a buffer 83 for temporarily storing data read from the optical disk drive 81 so as to allow the data from the optical disk to be read at a high speed. An auxiliary CPU 84 is connected to the decoder 82.

Sound data recorded on the optical disk which is read by the optical disk drive 81 includes PCM data converted from analog sound signals, in addition to the ADPCM data. The ADPCM data, which is recorded as 4-bit differential data of 16-bit digital data, is decoded by the decoder 82, supplied to the SPU 71, converted thereby into analog data, and applied to drive the speaker 73. The PCM data, which is recorded as 16-bit digital data, is decoded by the decoder 82 and then applied to drive the speaker 73.

The communication controller 90 comprises a communication control mechanism 91 for controlling communication with the CPU 51 via the bus BUS. The communication control mechanism 91 has the controller connectors 9A, 9B to which the manual controller 20 for entering commands from the user is connected, and the memory card insertion units 8A, 8B for receiving a memory card 10 as an auxiliary memory device for storing game settings, etc. and the portable terminal 100.

The manual controller 20 connected to one of the controller connectors 9A, 9B has 16 command keys, for example, for entering commands from the user, and transmits statuses of the command keys about 60 times per second to the communication control mechanism 91 by way of synchronous communication according to an instruction from the communication control mechanism 91. The communication control mechanism 91 transmits the statuses of the command keys to the CPU 51.

In this manner, commands from the user are applied to the CPU 51, which carries out a process according to the commands based on the game program being executed.

A large amount of image data needs to be transferred at high speed between the main memory 53, the GPU 62, the image decoder 64, and the decoder 82 for reading a program, displaying an image, or generating and storing image data.

In the entertainment apparatus 1, data are transferred directly between the main memory 53, the GPU 62, the image decoder 64, and the decoder 82 according to the DMA data transfer under the control of the peripheral device controller 52, rather than the CPU 51. Therefore, the burden on the CPU 51 can be reduced for data transfer, and high-speed data transfer can be achieved between the main memory 53, the GPU 62, the image decoder 64, and the decoder 82.

When setting data of a game being executed need to be stored, the CPU 51 transmits the setting data to the communication control mechanism 91, which writes the transmitted setting data into the memory card 10 or the portable terminal 100 which is inserted in the memory card insertion unit 8A or 8B.

The communication control mechanism 91 has a built-in protection circuit for protection against electric breakdown. The memory card 10 and the portable terminal 100 are separate from the bus BUS, and can be connected and disconnected while the entertainment apparatus 1 is being energized. Therefore, when the memory card 10 and the portable terminal 100 suffer a storage capacity shortage, a new memory card or terminal can be connected without having to turning off the entertainment apparatus 1. Consequently, any game data that need to be backed up can be stored in a new memory card connected to the entertainment apparatus 1, without the danger of being lost.

As shown in FIG. 4, the entertainment apparatus 1 further includes a parallel I/O interface (PIO) 96 and a serial I/O interface (SIO) 97 which serve to connect external extended devices to the entertainment apparatus 1.

The portable terminal 100 according to the embodiment of the present invention will be described below. It is assumed that the portable terminal 100 will be used as a slave unit connected to the entertainment apparatus 1 which serves as a master unit.

The portable terminal 100 is inserted into one of the memory card insertion units 8A, 8B in the slots 7A, 7B of the entertainment apparatus 1, and can be used as a memory card inherent in the connected manual controllers 20. For example, if two users or game players play a game on the entertainment apparatus 1, then two terminals 100 are connected to store game results of the respective users.

In order to electrically connect power supply terminals and ground terminals earlier than the other terminals when the memory card 10 and the portable terminal 100 are inserted into the memory card insertion units 8A, 8B, those power supply terminals and ground terminals of connectors of the memory card 10 and the portable terminal 100 are made longer than the other terminals for the purpose of achieving safety and stability of electric operation. Corresponding connector conductors of the memory card insertion units 8A, 8B may be made longer than the other connector conductors, or both power supply terminals and ground terminals of connectors of the memory card 10 and the portable terminal 100 and the connector conductors of the memory card insertion units 8A, 8B may be made longer than the other terminals and connector conductors. Furthermore, the connectors of the memory card 10 and the portable terminal 100 may be asymmetrically shaped in their longitudinal direction for preventing themselves from being inserted in the wrong direction.

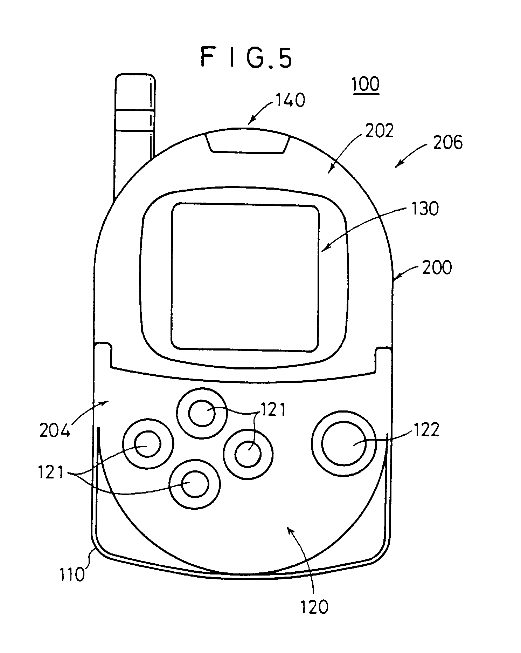

As shown in FIGS. 5 through 8, the portable terminal 100 has a housing 101 which supports a manual control pad 120 having one or more direction buttons 121 and a decision button 122 for entering events and making various selections, a color display unit 130 having a display screen 128 comprising a TFT-type color liquid crystal display (LCD) unit or the like, and a window 140 for wireless communication such as infrared communication with a wireless communication command unit (described later).

The housing 101 comprises an upper shell 101a and a lower shell 101b, and houses a board 151 which supports memory devices, etc. thereon. The housing 101 is shaped so as to be insertable into either one of the slots 7A, 7B in the casing 2 of the entertainment apparatus 1. The housing 101 has a connector 150 on the side of one end thereof which includes a rectangular window.

The window 140 is mounted on a substantially semicircular end of the housing 101 remote from the connector 150. The color display unit 130 occupies a substantially half area of the upper shell 101a of the housing 101, and is positioned near the window 140.

The manual control pad 120 occupies the other substantially half area of the upper shell 101a, and is positioned remotely from the window 140. The manual control pad 120 comprises a substantially square lid 110 that is angularly movably supported on the housing 101 and supports thereon the direction buttons 121 and the decision button 122, and switch pressers 102, 103 positioned in an area of the housing 101 which can be opened and closed by the lid 110.

The direction buttons 121 and the decision button 122 extend through the lid 110 from its upper surface to its lower surface. The direction buttons 121 and the decision button 122 are supported on the lid 110 for movement into and out of the upper surface of the lid 110.

The switch pressers 102, 103 have respective pressing elements supported on the housing 101 for movement into and out of the upper surface of the housing 101. When one of the pressing elements is pressed from above, it presses a corresponding a pressure switch such as a diaphragm switch, for example, mounted on the board 151 in the housing 101.

With the lid 110 closed, the switch pressers 102, 103 are held in vertical alignment with the direction buttons 121 and the decision button 122, respectively. Therefore, while the lid 110 is being closed over the housing 101, when the direction buttons 121 and the decision button 122 are pressed from above into the upper surface of the lid 110, the direction buttons 121 and the decision button 122 cause the pressing elements of the corresponding switch pressers 102, 103 to press corresponding pressure switches in the housing 101.

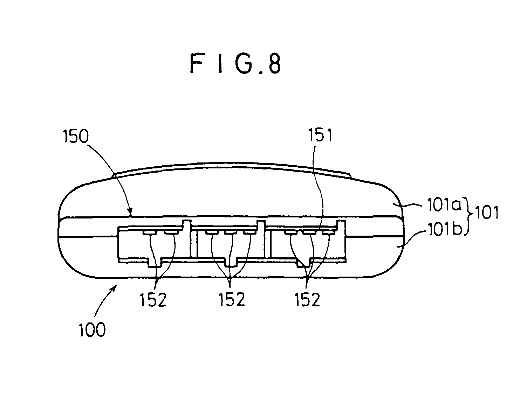

As shown in FIG. 8, power and signal terminals 152 are mounted on the board 151 and disposed in the window of the connector 150.

The connector 150 has a shape and dimensions that are identical to those of the memory card 10 used in the entertainment apparatus 1.

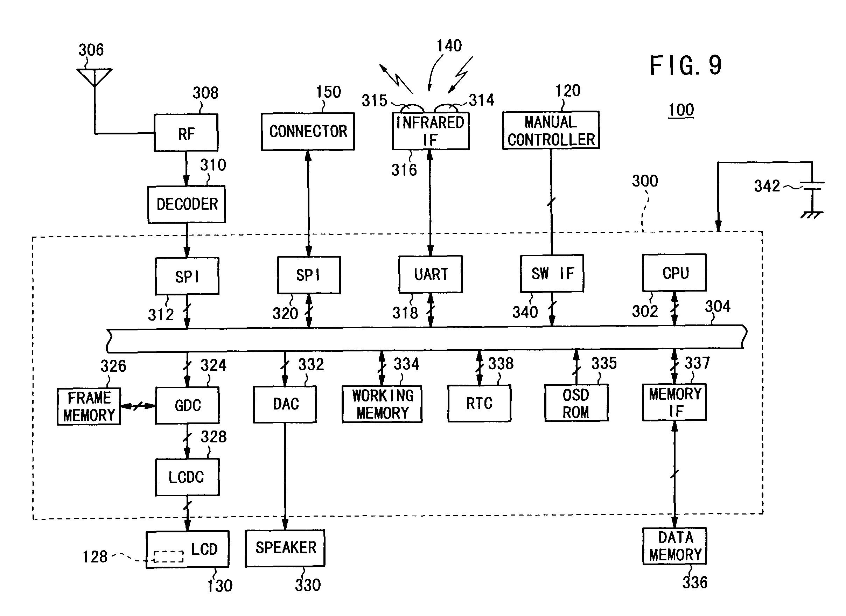

An arrangement of major components of the portable information terminal 100 will be described below with reference to FIG. 9.

The portable terminal 100 has a controller 300 which comprises a microcomputer or the like including a CPU 302 for controlling the overall system of the portable terminal 100.

The CPU 302 manages a system bus 304 to which various blocks of the portable terminal 100 are connected.

The portable terminal 100 has three communication input routes to which advertisement information or the like can be inputted as data.

The first communication route comprises a reception antenna 306, an RF processor 308, a decoder 310, and a serial-to-parallel interface (SPI) 312 for converting a serial signal to a parallel signal. A radio wave representing advertisement information sent from a radio station (not shown) and received by the reception antenna 306 is converted from an RF signal to an IF signal by the RF processor 308, and the IF signal is demodulated thereby. The demodulated signal is then converted by the decoder 310 to serial data, which is converted by the SPI 312 to parallel data that is outputted to the system bus 304. The reception antenna 306 and the RF processor 308 jointly make up a radio wave inputting means.

When advertisement information or the like is inputted as data via the first communication route, the portable terminal 100 is not connected to the entertainment apparatus 1, i.e., is independent of the entertainment apparatus 1, e.g., is carried by the user.

The second communication route is a route along which communication data can be inputted and outputted, and comprises an infrared interface 316 which is a module according to IrDA (Infrared Data Association) standards, with infrared-emitting and -detecting diodes 314, 315 integrally mounted thereon, and a UART (Universal Asynchronous Receiver Transmitter) 318 as an interface for asynchronous data transfer. Infrared rays are received and sent along the second communication route when they are inputted from and outputted to an external source by the infrared interface 316, and converted from a parallel signal to a serial signal and from a serial signal to a parallel signal and inputted to and outputted from the system bus 304. The infrared interface 316 serves as an infrared information inputting/outputting means.

When advertisement information or the like is inputted as data via the second communication route, the portable terminal 100 is not connected to the entertainment apparatus 1, i.e., is independent of the entertainment apparatus 1, e.g., is carried by the user.

The third communication route is a route along which communication data can be inputted and outputted, and comprises a connector (physical connector) 150 for use in making a physical connection and a serial-to-parallel interface (SPI) 320. The connector 150 is connected to either one of the portable terminal insertion units 8A, 8B in the slots 7A, 7B of the entertainment apparatus 1. Serial data of information including advertisement information read from an optical disk such as a CD-ROM or the like by the optical disk drive 81 is supplied via the connector 150 to the SPI 320, from which the serial data is outputted as parallel data to the system bus 304.

For displaying an image on the display screen 128 of the color display unit 130 of the portable terminal 100, a GDC (Graphic Display Controller) 324 as an image processing means exchanges data with a frame memory 326 connected to the GDC 324, and controls a LCDC (Liquid Crystal Display Controller) 328 as a liquid crystal display unit controller (liquid crystal display unit control means) to display an image on the display screen 128 of the color display unit 130 which comprises a TFT-type color liquid crystal display unit.

For outputting sound (including music) from a speaker 330 as a sound outputting means, a DAC (Digital-to-Analog Converter) 332 receives digital sound data from the system bus 304, converts the digital sound data to analog sound data, and outputs the analog sound data via the speaker 330.

To the system bus 304, there are connected a working memory 334 as a memory means which comprises an SRAM for temporarily storing data and calculated results required by the processing of the CPU 302, and a data memory 336 as an external memory means via a memory interface 337.

A ROM 335 with a built-in OSD (On Screen Display) function (also referred to as an OSDROM), which may comprise a flash memory, for example, is connected to the system bus 304. The ROM 335 stores a control program such as a kernel or the like. A real-time clock (RTC) 338 having a calendar and clock function is also connected to the system bus 304.

The manual controller 120 is connected via a switch interface (SWIF) 340 to the system bus 304. The switch interface 340 also functions as an interrupt generating means.

Electric energy is supplied from a battery 342 to the controller 300. Therefore, while the portable terminal 100 is being independent of the entertainment apparatus 1, the portable terminal 100 can execute application software stored in the data memory 336. The data and application software stored in the data memory 336 are backed up by a nonvolatile memory or the like when the power supply of the portable terminal 100 is turned off.

In FIG. 9, the CPU 302, the working memory 334, the OSDROM 335, and the data memory 336 operate as a computer which performs calculations and data processing according to a program (including application software). The GDC 324 and the frame memory 326 operate as a display control means for displaying advertisement information, time information, or display information based on the application software executed by the computer, on the display screen 128 of the display unit 130.

Data display or sound generation relative to advertisement information obtained via the first, second, and third communication routes will be described below.

The portable terminal 100 has a function to display advertisement information received as data, together with clock and calendar information, on the display screen 128 of the display unit 130 in a clock display mode. In this sense, the portable terminal 100 may be referred to as a portable terminal with an advertisement medium.

Data representing advertisement information may be data of any contents, e.g., compressed still images (JPEG or the like), moving images or the like (MPEG or the like), animation, two-dimensional and three-dimensional graphics, log marks of manufacturers and brands, and letters and symbols in prepared fonts. If data representing advertisement information is two-dimensional and three-dimensional graphics data, then in order to save a data capacity, the portable terminal 100 may be arranged as a stepwise reception system for receiving image data (texture data) at first and then receiving a primitive list and commands.

Advertisement information obtained via the first, second, and third communication routes is usually stored in a predetermined area in the external data memory 336 via the system bus 304.

Upon elapse of a certain period of time after the user operates or does not operate the manual controller 120 while the portable terminal 100 is displaying, on the display screen 128, display information based on application software executed by the CPU 302, e.g., entertainment software including game software or the like, the CPU 302 places the portable terminal 100 into the clock display mode. In the clock display mode, the CPU 302 refers to the real-time clock 338.

Substantially simultaneously when the CPU 302 reads clock and calendar display data from the real-time clock 338, the CPU 302 reads advertisement data stored in the data memory 336, and the GDC 324 and the frame memory 326 operate with each other to combine the clock and calendar display data and the advertisement data in the frame memory 326, and display the combined data on the display screen 128 of the color display unit 130.

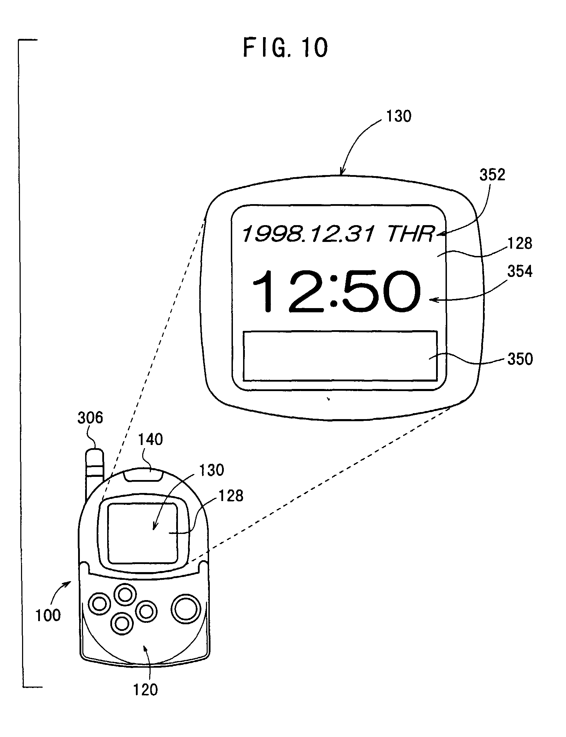

FIG. 10 shows, by way of example, advertisement information display (also referred to as advertisement display or advertisement information) 350, calendar display (also referred to as calendar information) 352 (" 1998.12.31 THR" in FIG. 10), and time display (also referred to as time information) 354 (" 12:50" in FIG. 10) that are made on the display screen 128 of the color display unit 130 based on the combination of the clock and calendar display data and the advertisement data.

Since the display screen 128 simultaneously display the calendar information 352, the time information 354, and the advertisement information 350 based on the real-time clock which draws much attention of the user, the displayed information is highly effective as an advertisement.

The advertisement information 350 is entered via the first, second, and third communication routes and then displayed on the display screen 128, the advertisement information 350 that is usually required to be highly fresh can easily be updated.

Inasmuch as the first, second, and third communication routes may receive radio wave data, infrared data, and data from the physical connector, either one of these data may be selected and used according to the intention of the advertiser or the user.

Not only one piece of advertisement information, but also a plurality of pieces of advertisement information may be stored as data in the data memory 336, so that the CPU 302, the GDC 324, and the frame memory 326 will select the plurality of pieces of advertisement information and display them on the display screen 128 according to a given rule given below.

The given rule may be either a rule for taking out and displaying newly received advertisement information on the display screen 128 {so-called a last-in first-out (LIFO) rule}, a rule for displaying advertisement information a certain number of times and then displaying next advertisement information a certain number of times, a rule for displaying advertisement information for a certain period of time and then displaying next advertisement information for a certain period of time, or a rule for allowing the user to select preferred advertisement information based on a control action made via the manual controller 120.

If real-time advertisement information is important, then when advertisement information is inputted as data into the working memory 334 via one of the first, second, and third communication routes, the advertisement information inputted into the working memory 334 may be displayed on the display screen 128 substantially on a real-time basis. The advertisement information can thus be transmitted immediately to the user who is watching the display screen 128. The user may use the manual controller 120 to change to such a real-time display process.

If advertisement information inputted as data comprises image information and sound information, then the image information and the sound information may be stored in the data memory 336 and synchronously displayed on the display screen 128 and outputted from the speaker 330, or stored in the working memory 334 and synchronously displayed on the display screen 128 and outputted from the speaker 330. In this case, an advertisement is given in the form of an image and sound, the advertisement information can be appealed more efficiently to the user.

The advertisement information 350 may be displayed on the display screen 128 at all times or for particular times (e.g., for 1 minute in every 15 minutes) by measuring the real-time clock 338. Such particular times may be selected by the user depending on the preference or the like of the user. The calendar information 352 and the time information 354 may be displayed in a semitransparent fashion, i.e., a see-through fashion, and the advertisement information 350 may be displayed on the display screen 128 in its entirety.

Advertisement information may be controlled by the CPU 302 so as to be inputted from the first, second, and third communication routes when a certain one of plural pieces of application software stored in the data memory 336 is activated or neither one of the plural pieces of application software is executed. In this manner, since the inputting of advertisement information is not caused as an interrupt while application software is being executed, advertisement information is read into the working memory 334 or the data memory 336 without being noticed by the user, and the user can smoothly execute application software.

The portable terminal 100 described above is a portable terminal that can be connected to the entertainment apparatus 1. However, the present invention is not limited to the portable terminal that can be connected to the entertainment apparatus 1, but may be applied to all portable terminals including a portable telephone set, a PHS terminal, a portable game machine, a pedometer, and a PDA having an electronic note pad function (preferably a color display unit such as a color liquid-crystal display unit or the like) which are capable of displaying clock information such as calendar information and/or time information.

The portable terminal 100 or other portable terminals including a portable telephone set, a PHS terminal, a portable game machine, a pedometer, and a PDA are thus capable of placing an advertisement on the display screen which draws much attention of the user, i.e., which is frequently viewed by the user, in order to recognize a time and a date. Therefore, the portable terminal 100 or other portable terminals can be used as a highly effective advertisement medium for advertisers.

The portable terminal capable of displaying advertisements can effectively utilize display resources of the display screens of small-size liquid-crystal display units which have improved capabilities including higher resolutions, higher gradations and more colors, lower power requirements, sharper images, and lower profiles.

Furthermore, the portable terminal allows contents suppliers for distributing information or portable terminal suppliers to obtain an advertisement income, which leads to a reduction in contents fees and portable terminal prices, and hence provides an advertisement information providing system that is highly convenient and economical for the user.

According to the present invention, therefore, the portable terminal can display advertisement information and display information based on application software, and thus can function as an advertisement medium.

Since an advertisement is also displayed simultaneously in the clock and calendar mode, the portable terminal is provided with an advertisement medium function which is a new function that has not be available heretofore.

Although a certain preferred embodiment of the present invention has been shown and described in detail, it should be understood that various changes and modifications may be made therein without departing from the scope of the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A portable terminal with an advertisement medium function, comprising:
a computer (302, 334, 335, 336), a display screen (128), and a manual controller (120); and
display control means (324, 328) for displaying, on said display screen (128), advertisement information (350) and display information based on application software executed by said computer (302, 334, 335, 336).

2. A portable terminal according to claim 1, wherein said application software includes at least entertainment-related software.

3. A portable terminal with an advertisement medium function, comprising:
a computer (302, 334, 335, 336) having a real-time clock (338) and a display screen (128); and
display control means (324, 328) for displaying, on said display screen (128), advertisement information (350) and time information (352, 354) based on said real-time clock (338).

4. A portable terminal according to any one of claims 1 to 3, further comprising:
a communication input unit (306, 308, 310, 312), (316, 318), (150, 320) for receiving information via communications;
the arrangement being such that said advertisement information (350) is inputted by said communication input unit (306, 308, 310, 312), (316, 318), (150, 320) and displayed on said display screen (128).

5. A portable terminal according to claim 4, wherein said communication input unit (306, 308, 310, 312), (316, 318), (150, 320) comprises at least one, at least two, or all of radio wave inputting means (306, 308, 310, 312), infrared information inputting means (316, 318), and a physical connector (150, 320).

6. A portable terminal according to claim 4 or 5, wherein said computer (302, 334, 335, 336) includes a data storing memory (336), the arrangement being such that when a plurality of pieces of advertisement information inputted from said communication input unit (306, 308, 310, 312), (316, 318), (150, 320) are stored as data in said data storing memory (336), said display control means (324, 328) displays the plurality of pieces of advertisement information stored in said data storing memory (336) on said display screen (128) according to a given rule.

7. A portable terminal according to claim 6, wherein said given rule is either a rule for taking out and displaying newly received advertisement information, a rule for displaying advertisement information a certain number of times and then displaying next advertisement information a certain number of times, a rule for displaying advertisement information for a certain period of time and then displaying next advertisement information for a certain period of time, or a rule for allowing the user to select preferred advertisement information based on a control action made via said manual controller (120).

8. A portable terminal according to claim 4 or 5, wherein said computer (302, 334, 335, 336) includes a working memory (334), the arrangement being such that when advertisement information inputted from said communication input unit (306, 308, 310, 312), (316, 318), (150, 320) is supplied as data in said working memory (334), said display control means (324, 328) displays the advertisement information supplied to said working memory (334) substantially on a real-time basis.

9. A portable terminal according to claim 6 or 8, further comprising:
sound outputting means (330) for outputting sounds;
said computer (302, 334, 335, 336) comprising means for, if advertisement information inputted from said communication input unit (306, 308, 310, 312), (316, 318), (150, 320) as data comprises image information and sound information, storing the image information and the sound information in the data storing memory (336) and synchronously displaying the image information on said display screen (128) and outputting the sound information from said sound outputting means (330).

10. A portable terminal according to any one of claims 1 to 9, wherein said display control means (324, 328) comprises means for displaying said advertisement information on said display screen (128) at all times or for particular times by measuring said real-time clock (338).

11. A portable terminal with an advertisement medium function, comprising:
a computer (302, 334, 335, 336), a display screen (128), and a manual controller (120);
display control means (324, 328) for displaying, on said display screen (128), advertisement information (350) and display information based on either one of a plurality of pieces of application software executed by said computer (302, 334, 335, 336);
a communication input unit (306, 308, 310, 312), (316, 318), (150, 320) for receiving information via communications;
the arrangement being such that advertisement information is controlled by said computer (302, 334, 335, 336) so as to be inputted as data from said communication input unit (306, 308, 310, 312), (316, 318), (150, 320) when a certain one of said plurality of pieces of application software is activated or neither one of said plurality of pieces of application software is executed.
